# EUROPEAN PATENT SPECIFICATION

(11) **EP 3 016 082 B1**
(45) Date of publication and mention of the grant of the patent: **02.06.2021**
(21) Application number: 15191695.4
(22) Date of filing: 27.10.2015
(51) Int. Cl.: G08C 17/00

(54) **SMART DEVICE CONTROL METHOD AND APPARATUS BASED ON PREDEFINED SCENARIO MODE**
STEUERUNGSVERFAHREN UND -VORRICHTUNG FÜR INTELLIGENTE VORRICHTUNG AUF GRUNDLAGE EINES MODUS FÜR VORDEFINIERTE SZENARIEN
PROCÉDÉ DE COMMANDE DE DISPOSITIF À PUCE ET APPAREIL BASÉ SUR UN MODE DE SCÉNARIO PRÉDÉFINI

(30) Priority: 29.10.2014 CN 201410594507
(43) Date of publication of application: 04.05.2016
(73) Proprietor: Xiaomi Inc., Beijing 100085 (CN)
(72) Inventor: FU, Qiang, 100085 BEIJING (CN); GAO, Ziguang, 100085 BEIJING (CN); WANG, Yang, 100085 BEIJING (CN)
(74) Representative: Cabinet Beau de Loménie

(56) References cited:
- EP-A1- 2 506 232
- US-A1- 2013 226 316

## Description

### TECHNICAL FIELD

The invention relates to the field of smart home control technologies, and more particularly, to a smart device control method and apparatus based on a predefined scenario mode.

### BACKGROUND

Household electric appliances have become indispensable in people's daily home lives. Most of traditional household electric appliances are controlled by people via touch control buttons or remotely via infrared remote controllers. With the development of the time, the household electric appliances operated in such traditional operation control mode fail to accommodate people's requirements on the operation and control of the household electric appliances.

Conforming to this trend, people propose a concept of smart home. The smart home, based on a dwelling, integrates all facilities associated with the home lives by using comprehensive technologies, for example, cable deployment technology, network communication technology, safety assurance technology, automation control system and audio/video technologies, to construct high-efficiency management system for dwelling facilities and household agenda affairs. As such, safety, convenience, comfort, and artistry of homes are improved, and an environmentally-friendly and energy-saving living environment is achieved. This concept has been extensively recognized as an overwhelming trend during the evolution of the future household electric appliances.

Document EP 2 506 232 A1 discloses a control apparatus which includes: a determination section that determines a control command according to sensor information, on the basis of a control rule capable of being set by a user for determining the control command controlling a device; and a control section that controls the device in accordance with the control command determined by the determination section.

Document US 2013/0226316 A1 discloses methods for controlling and parameterizing a home automation installation and home automation installation implementing said methods.

### SUMMARY

Embodiments of the invention provide a smart device control method and apparatus based on a predefined scenario mode. The following technical solutions are employed.

According to a first aspect of the invention, a smart device control method based on a predefined scenario mode according to the features of claim 1 is provided.

In a particular embodiment, the scenario mode at least comprises: user account information, device information of a bound smart device, a startup condition, and a to-be-executed task, wherein
the device information of a bound smart device includes device information of at least one first smart device and at least one second smart device that are bound to the user account;
the startup condition is state parameter information collected by the at least one first smart device, the startup condition being a condition predefined for triggering the scenario mode; and
the to-be-executed task is a control instruction corresponding to the scenario mode and to be sent to the at least one second smart device when the scenario mode is triggered.

In a particular embodiment, the scenario mode further includes: a startup condition logical relation; wherein
the startup condition logical relation is configured to indicate a logical relation among the state parameter information collected by the at least one first smart device, the startup condition logical relation being a condition for triggering the scenario mode; and
the step of determining, according to the state parameter information, whether to trigger a predefined scenario mode comprises a step of:
determining, according to the state parameter information, the state parameter information collected by the at least one first smart device satisfies the startup condition logical relation, and triggering the scenario mode if the startup condition logical relation is satisfied.
In a particular embodiment, the scenario mode further includes: a condition-task correlation table; wherein
the condition-task correlation table records a correspondence relation between at least one group of startup conditions and to-be-executed tasks; and
the step of determining, according to the state parameter information, whether to trigger a predefined scenario mode comprises steps of:
   determining, according to the state parameter information, whether the state parameter information collected by the at least one first smart device matches with at least one startup condition in the condition-task correlation table; and
   triggering at least one to-be-executed task corresponding to the at least one startup condition according to the condition-task correlation table if at least one startup condition in the condition-task correlation table is satisfied

In a particular embodiment, the step of acquiring comprises a step of:
acquiring user account information of the user account and device information of the at least one first smart device;
the step of determining comprises steps of:
   searching for at least one predefined scenario mode according to the user account information and the device information of the at least one first smart device, and determining, according to the state parameter information, whether to trigger the searched predefined scenario mode; and the step of sending comprises a step of:
   if it is determined to trigger the searched scenario mode, sending the control instruction to the at least one second smart device according to device information of the at least one second smart device recorded in the searched scenario mode.

In a particular embodiment, in the method:
the step of acquiring state parameter information collected by at least one first smart device bound to a user account further comprises steps of:
acquiring content information collected by the at least one first smart device; and
if it is determined to trigger the scenario mode, the step of sending a corresponding control instruction to t least one second smart device bound to the user account according to the scenario mode further comprises a step of:
   sending the content information collected by the at least one first smart device to the at least one second smart device bound to the user account.

In a particular embodiment, the method comprises steps of :
acquiring trigger information of the predefined scenario mode;
wherein the trigger information of the scenario mode is generated by determination of the at least one first smart device bound to the user account according to the collected state parameter information;
   or
the trigger information of the scenario mode is generated by determination of a router connected to the at least one first smart device over a network according to the state parameter information collected by the at least one first smart device; and
sending a corresponding control instruction to at least one second smart device bound to the user account in the scenario mode according to the trigger information of the scenario mode, to control the second smart device to perform a corresponding operation.

According to a second aspect of the invention, a smart device control apparatus based on a predefined scenario mode according to the features of claim 8 is provide.

In a particular embodiment, the scenario mode at least comprises: user account information, device information of a bound smart device, a startup condition, and a to-be-executed task, wherein
the device information of a bound smart device includes device information of at least one first smart device and at least one second smart device that are bound to the user account;
the startup condition is state parameter information collected by the at least one first smart device, the startup condition being a condition predefined for triggering the scenario mode; and
the to-be-executed task is a predefined control instruction corresponding to the scenario mode and to be sent to the at least one second smart device when the scenario mode is triggered.

In a particular embodiment, the scenario mode further comprises: a startup condition logical relation; wherein
the startup condition logical relation is configured to indicate a logical relation among the state parameter information collected by the at least one first smart device, the startup condition logical relation being a condition for triggering the scenario mode; and
the scenario mode triggering module comprises a logical relation determining unit; wherein
the logical relation determining unit is configured to determine, according to the state parameter information, whether the state parameter information collected by the at least one first smart device satisfies the startup condition logical relation, and trigger the scenario mode if the startup condition logical relation is satisfied.

In a particular embodiment, the scenario mode further comprises: a condition-task correlation table; wherein
the condition-task correlation table records a correspondence relation between at least one group of startup conditions and to-be-executed tasks; and
the scenario mode triggering module comprises a condition-task correlation table querying unit; wherein
the condition-task correlation table querying unit is configured to determine, according to the state parameter information, whether the state parameter information collected by the at least one first smart device matches with at least one startup condition in the condition-task correlation table, and trigger an least one to-be-executed task corresponding to the an least one startup condition according to the condition-task correlation table if at least one startup conditions in the condition-task correlation table is satisfied

In a particular embodiment, the state parameter information acquiring module is further configured to acquire user account information of the user account and device information of the at least one first smart device;
the scenario mode triggering module is further configured to search for at least one predefined scenario mode according to the user account information and the device information of the
at least one first smart device, and determine, according to the state parameter information, whether to trigger the searched predefined scenario mode; and
the control instruction sending module is further configured to: if it is determined to trigger
the searched scenario mode, send the control instruction to the at least one second smart device according to device information of the at least one second smart device recorded in the searched scenario mode.

In a particularembodiment, in the control apparatus:
the state parameter information acquiring module is further configured to acquire content information collected by the at least one first smart device; and
the control instruction sending module is further configured to: if it is determined to trigger the scenario mode, send the content information collected by the at least one first smart device to the at least one second smart device bound to the user account.

In a particular embodiment, the control apparatus further comprises:
a trigger information acquiring module, configured to acquire trigger information of the predefined scenario mode;
wherein the trigger information of the scenario mode is generated by determination of the at least one first smart device bound to the user account according to the collected state parameter information;
   or
the trigger information of the scenario mode is generated by determination of a router connected to the at least one first smart device over a network according to the state parameter information collected by the at least one first smart device; and
the control instruction sending module is configured to send a corresponding control instruction to at least one second smart device bound to the user account in the scenario mode according to the trigger information of the scenario mode, to control the second smart device to perform a corresponding operation.

A computer program is provided according to a another aspect of the invention. The computer progrm performs the steps of the smart device control method based on a predefined scenario mode when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the invention may achieve the following beneficial effects:
the smart device control method and apparatus according the invention associate different smart devices with each other by using predefined scenario modes on a cloud server as medium, such that the different smart devices are automatically linked and controlled based on an association relation information defined in the scenario mode. With the smart device control method and apparatus, originally individual and independent smart devices may be associated with each other, and the application scenarios of the smart devices may be extended via a combination of smart devices.

It shall be appreciated that the above general description and the detailed description hereinafter are only illustrative but not for limiting the invention.

### BRIEF DESCRIPTION OF THE DRAWINGS

To clearly describe embodiments of the invention, drawings to which the description of the embodiments are referred are briefly described hereinafter. Apparently, the drawings described hereinafter merely illustrate some embodiments of the invention. Persons of ordinary skill in the art may also derive other drawings based on the drawings described herein without any creative effort.
FIG. 1 is a flowchart illustrating a smart device control method based on a predefined scenario mode according to an exemplary embodiment of the invention;
FIG. 2 is a flowchart illustrating a scenario mode predefining method according to an exemplary embodiment of the invention;
FIG. 3A is a schematic diagram illustrating an interface recommended for a scenario mode according to an exemplary embodiment of the invention;
FIG. 3B is another schematic diagram illustrating an interface recommended for a scenario mode according to an exemplary embodiment of the invention;
FIG. 4 is another flowchart illustrating a scenario mode predefining method according to an exemplary embodiment of the invention;
FIG. 5A is a schematic diagram illustrating an interface recommended for a user-defined scenario mode according to an exemplary embodiment of the invention;
FIG. 5B is another schematic diagram illustrating an interface recommended for a user-defined scenario mode according to an exemplary embodiment of the invention;
FIG. 5C is another schematic diagram illustrating an interface recommended for a user-defined scenario mode according to an exemplary embodiment of the invention;
FIG. 5D is another schematic diagram illustrating an interface recommended for a user-defined scenario mode according to an exemplary embodiment of the invention;
FIG. 6 is a schematic diagram illustrating a smart device control apparatus based on predefined a scenario mode according to an exemplary embodiment of the invention;
FIG. 7 is a schematic diagram illustrating a scenario mode predefining module according to an exemplary embodiment of the invention;
FIG. 8 is another schematic diagram illustrating a scenario mode predefining module according to an exemplary embodiment of the invention; and
FIG. 9 is a block diagram illustrating a smart device control apparatus based on a predefined scenario mode according to an exemplary embodiment of the invention.

The above drawings are used for illustrating the embodiments of the invention, and more details will be given hereinafter. These drawings and textual descriptions are not intended to limit the scope defined in the invention in any way, but intended to describe the inventive concept of the invention, through specific embodiments, for a person skilled in the art.

### DETAILED DESCRIPTION

To make the objectives, technical solutions, and advantages of the invention clearer, the invention is further described in detail with reference to the accompanying drawings. Apparently, embodiments described herein are merely exemplary, rather than exhaustive. Based on the embodiments of the invention, all other embodiments derived by persons of ordinary skill in the art without any creative efforts shall fall within the protection scope of the invention.

It should be noted that, the electronic device involved in various embodiments of the invention may be a mobile phone, a tablet computer, an electronic book reader, a Moving Picture Experts Group Audio Layer III (MP3) player, a Moving Picture Experts Group Audio Layer IV (MP4) player, a laptop computer, a desktop computer, and the like.

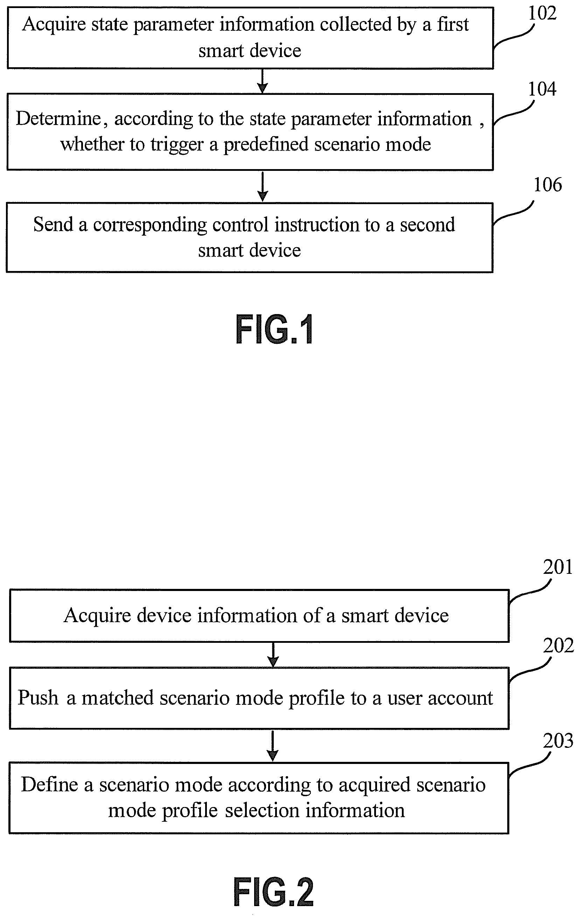

FIG. 1 is a flowchart illustrating a smart device control method based on a predefined scenario mode according to an exemplary embodiment of the invention. This embodiment describes the method by using an example wherein the control method is implemented by a server (for example, a cloud server capable of communicating with one or more smart devices via the Internet). The smart device control method may include the following steps.

In step 102, state parameter information collected by at least one first smart device bound to a user account is acquired.

In step 104, it is determined, according to the state parameter information, whether to trigger a predefined scenario mode, wherein the scenario mode is configured to record an association relation information for triggering operation control on at least one second smart device according to the state parameter information collected by the at least one first smart device.

In step 106, if it is determined to trigger the scenario mode, a corresponding control instruction is sent to at least one second smart device bound to the user account according to the scenario mode, to control the second smart device to perform a corresponding operation.

In conclusion, the smart device control method according to this embodiment enables to associate different smart devices (e.g. the first and second smart devices) with each other by using predefined scenario modes on a cloud server (e.g. the server implementing the control method) as a medium, such that the different smart devices are automatically linked and controlled based on an association relation information defined in the scenario modes. With the smart device control method, originally individual and independent smart devices may be associated with each other, and the application scenarios of the smart devices may be extended via a combination of smart devices.

The smart device according to this embodiment is a smart home device. It should be noted that the smart device control method has great extensibility and compatibility, and any smart device capable of connecting to the Internet to communicate with other smart devices may implement the corresponding smart device control method according to this embodiment.

A scenario mode at least records the following information: user account information, device information of a bound smart device, a startup condition, and a to-be-executed task.

In a particular embodiment, the device information of a bound smart device comprises device information of at least one first smart device and at least one second smart device that are bound to a user account; and the device information may include: device ID information and device type information. The device ID information may be a MAC address, an IP address, a serial number or the like of a device. The device type information may be information indicative of the type of a device. For example, a smart socket, a smart camera, a smart TV, a smart air conditioner, or the like. Accordingly, different types of devices may collect different state parameter information, and may respond to different control instructions.

The startup condition is state parameter information collected by the at least one first smart device (for example, a smart socket, a smart camera, a smart air conditioner...), which is a condition predefined for triggering a scenario mode. The collected state parameter information may come from different types of devices. For example, information on current ON/OFF state of the socket collected from a smart socket, information, indicating whether a moving object is present in a monitored area range, collected from a smart camera, and information on current indoor temperature and ON/OFF state and the like collected from a smart air conditioner. These state parameters may all be used as the state parameter information collected by the first smart devices.

The to-be-executed task is a predefined control instruction corresponding to a scenario mode and to be sent to the at least one second smart device (for example, a smart socket, a smart camera, a smart air conditioner...) when the scenario mode is triggered. The corresponding control instructions may be sent to different types of device. For example, a control instruction to a smart socket may be to control ON/OFF state of the socket, and a control instruction to a smart air conditioner may be to control ON/OFF state, defined temperatures, and the like of the air conditioner.

In this embodiment, a plurality of first smart devices are configured in the scenario mode. State parameter information collected from each of the plurality of first smart devices serves as one of factors in the startup condition for determining whether to trigger the scenario mode. Herein, two methods for determining whether to trigger the scenario mode under circumstances where a plurality of first smart devices are present are given.

### Method 1:

The scenario mode further includes a startup condition logical relation. The startup condition logical relation is configured to indicate a logical relation among the state parameter information collected by the at least one first smart device, the startup condition logical relation being a condition for triggering the scenario mode. The logical relation herein may be logical operator "AND" or logical operator "OR", or a combination logical function constituted by logical operators "AND" and "OR".

The step of determining, according to the state parameter information, whether to trigger a predefined scenario mode includes:
determining, according to the state parameter information, whether the state parameter information collected by the at least one first smart device satisfies the startup condition logical relation, and triggering the scenario mode if the startup condition logical relation is satisfied.

According to the method, the state parameter information collected by each first smart device is used as a factor for determining whether to trigger the scenario mode. It is determined whether to trigger a scenario mode by verifying a predefined logical relation among these factors.

### Method 2:

The scenario mode further includes: a condition-task correlation table; wherein the condition-task correlation table records a correspondence relation between at least one group of startup conditions and to-be-executed tasks;
the step of determining, according to the state parameter information, whether to trigger a predefined scenario mode includes:
determining, according to the state parameter information, whether the state parameter information collected by the at least one first smart device satisfies at least one group of startup conditions in the condition-task correlation table; and
triggering to-be-executed tasks corresponding to the startup conditions according to the condition-task correlation table if at least one group of startup conditions in the condition-task correlation table are satisfied.

With the method, a condition-task correlation table is established in the scenario mode to determine a correspondence relation between startup conditions and to-be-executed tasks. Different startup conditions and different to-be-executed tasks are managed via the correlation table.

In this embodiment, in the smart device control method based on a predefined scenario mode:
the step of acquiring state parameter information collected by at least one first smart device bound to a user account further includes: acquiring user account information of the user account and device information of the at least one first smart device;
the step of determining, according to the state parameter information, whether to trigger a predefined scenario mode includes:
   searching for a corresponding predefined scenario mode according to the user account information and the device information of the at least one first smart device; and determining, according to the state parameter information, whether to trigger the searched scenario mode; and
   if it is determined to trigger the scenario mode, the step of sending a corresponding control instruction to at least one second smart device bound to the user account according to the scenario mode includes:
   if it is determined to trigger the scenario mode, sending the corresponding control instruction to the at least one second smart device according to device information of the at least one second smart device recorded in the scenario mode.

In this embodiment, the scenario modes stored on the server are managed based on the user account information. A plurality of predefined scenario modes may be managed under the same user account. The device information of the first smart device and the second smart device corresponding to different scenario modes may vary. When uploading the state parameter information to the server, the first smart device also uploads the bound user account information and the device information of the first smart device to the server. The server firstly searches out, according to the user account information, the scenario modes stored for the user, and then searches out the scenario mode corresponding to the device information of the first smart device according to the device information of the first smart device. If it is determined to trigger the scenario mode, a corresponding control instruction is sent to the second smart device according to the device information of the second smart device stored in the scenario mode.

In this embodiment, in the smart device control method based on a predefined scenario mode:
the step of acquiring state parameter information collected by at least one first smart device bound to a user account further includes: acquiring content information collected by the at least one first smart device; and
if the scenario mode is triggered, the step of sending a corresponding control instruction to at least one second smart device bound to the user account according to the scenario mode further includes: sending the content information collected by the at least one first smart device to the at least one second smart device bound to the user account.

In this embodiment, in addition to uploading the collected state parameter information to the server, the first smart device also uploads the collected content information to the server, and meanwhile sends the collected content information to the second smart device when the server sends a control instruction to the second smart device. The content information refers to information on events detected by the first smart device. For example, the smart camera detects that a moving object is present at home, which implies that a thief has entered home. In addition to uploading alarm information, the smart camera also uploads related videos as content information. When the second smart device receives the control instruction, the second smart device also receives the videos for further analysis and judgment.

FIG. 2 is a flowchart illustrating a scenario mode predefining method according to an exemplary embodiment of the invention. The scenario mode predefining method may include the following steps.

In step 201, device information of at least one smart device bound to a user account is acquired.

In step 202, at least one predefined scenario mode file matched with the device information of the at least one smart device is sent to the user account according to the device information of the at least one smart device, wherein the scenario mode file corresponds to a scenario mode.

In step 203, a scenario mode bound to the user account is defined according to the at least one scenario mode file and the user's selection via the user account.

This embodiment provides a scenario mode predefining method. According to the method, several scenario mode files are predefined on a server, and each scenario mode file corresponds to a scenario mode. An association relation between a first smart device and a second smart device is predefined in the scenario mode file. The server determines, according to acquired device information of a smart device bound to a user account, a scenario mode file suitable for the user account, and sends the matched scenario mode file to the user account. The scenario mode is finally defined according to user's selection via the user account. It should be noted that the scenario mode files may be predefined on the server for a user to select, or may be defined and uploaded by a user, which realizes scenario mode sharing among users. According to the method, a user may easily configure a scenario mode based on his or her bound smart device, rather than specifically defining an association relation, thereby reducing load of the user in defining a specific scenario mode.

Further, in the scenario mode predefining method:
The step of acquiring device information of at least one smart device bound to a user account includes: acquiring user account information of the user account and the device information of the at least one smart device bound to the user account, the device information at least including device ID information and device type information;
the scenario mode file at least includes: device type information of a bound smart device, a startup condition, and a to-be-executed task; the device type information of the bound smart device including: device type information of at least one first smart device and at least one second smart device, the startup condition being state parameter information collected by the at least one first smart device which is a condition predefined for triggering the scenario mode, and the to-be-executed task being a corresponding control instruction sent to the at least one second smart device when the scenario mode is triggered;
the step of sending, according to the device information of the at least one smart device, at least one predefined scenario mode file matched with the device information of the at least one smart device to the user account includes:
   according to the acquired device type information of the at least one smart device bound to the user account, obtaining the at least one scenario mode file matched with the device type information of the bound smart device, and sending the obtained scenario mode file to the user account; and
   the step of determining a scenario mode bound to the user account according to obtained scenario mode file and the user's selection via the user account includes:
      defining, according to the obtained scenario mode file and the user's selection via the user account, a scenario mode corresponding to the scenario mode file to be bound to the user account, the defined scenario mode being configured according to the acquired device information of the at least one smart device bound to the user account.

In this embodiment, the scenario mode file is defined according to the type of the smart device. Different types of smart devices may provide different state parameter information as the startup conditions, and respond to different control instructions. Therefore, a scenario mode file may be applicable with respect to a specific type of smart device; otherwise, the scenario mode file may not be useful. Just based on this, this embodiment provides a scenario mode file recommending method. Firstly, the device information of the smart device bound to the user account is acquired, and thus the user's currently available device type is acquired. Then, the scenario modes are screened in a scenario mode file library according to the device type information. Only when the first smart device and the second smart device in the scenario mode file are simultaneously bound to the user, the scenario mode file is sent to the user account. When the user makes a selection, since the device ID information is acquired according to the device information of the smart device, the server may define the scenario mode bound to the user account according to the scenario mode file selected by the user. The user account information of the scenario mode is the user account information uploaded in step 201, the device information of the first smart device and the second smart device is device information of the corresponding types of smart devices in the scenario mode, and the startup conditions and the to-be-executed tasks are predefined in the scenario mode file.

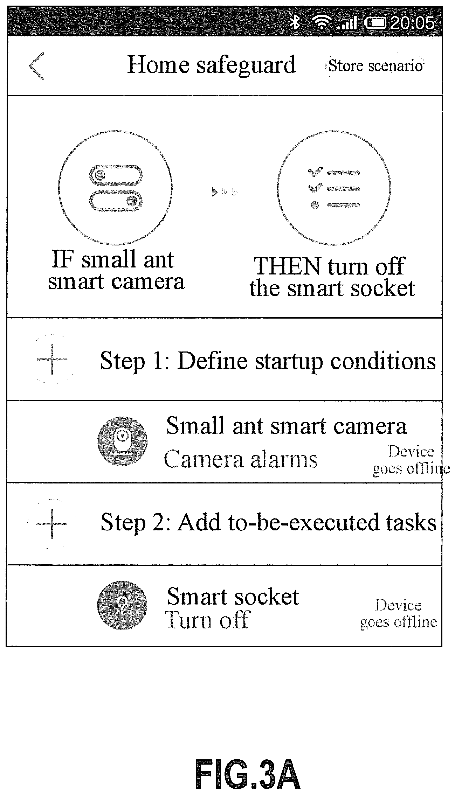

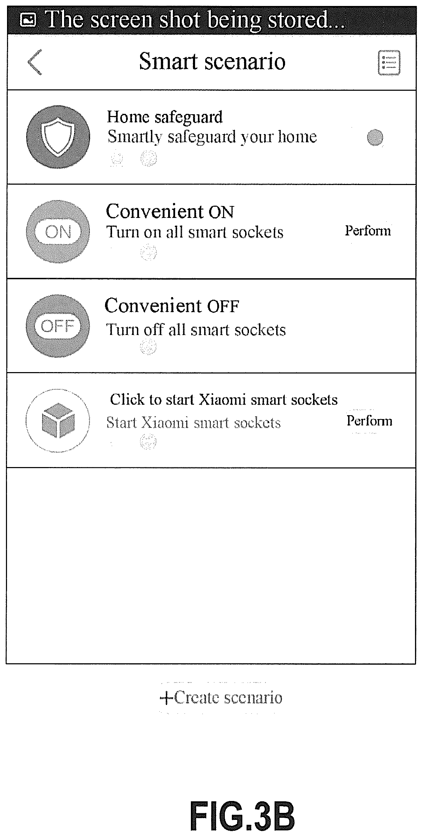

FIGS. 3A and 3B are schematic diagrams illustrating an interface recommended for a scenario mode according to an exemplary embodiment of the invention. As illustrated in FIGS. 3A and 3B, in this embodiment, a "home safeguard" scenario mode recommending example is given. The "home safeguard" scenario mode is a scenario mode file defined by a server. In the scenario mode profile, it is defined that a first smart device type is "small ant smart camera", a second smart device type is "smart socket", a startup condition is camera alarming, and a to-be-executed task is turning off the smart socket. After a user account is bound to a smart device, the server acquires device type information of the smart device bound to the user account, and determines whether the user account is bound to the " smart camera" and the "smart socket". When the user account is simultaneously bound to these two types of smart devices, the server sends the matched "home safeguard" scenario mode file to a user according to a search result. As illustrated in FIG. 3A, the user does not need to specifically configure the scenario mode, but to select to enable or disable the scenario mode. If the user selected to enable the "home safeguard" scenario mode, the "home safeguard" scenario mode may be automatically defined by configuration according to device information of the corresponding smart device bound to the user account, thereby implementing a linkage control relation between the " smart camera" and the "smart socket" bound to the user account.

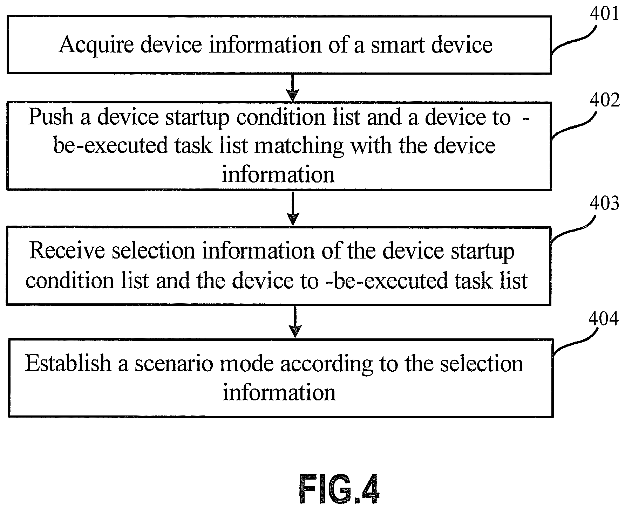

FIG. 4 is another flowchart illustrating a scenario mode predefining method according to an exemplary embodiment of the invention. The scenario mode predefining method may include the following steps.

In step 401, device information of at least one smart device bound to a user account is acquired.

In step 402, a device startup condition list and a device to-be-executed task list matched with the device information of the at least one smart device are sent to the user account respectively according to the device information of the at least one smart device.

In step 403, the user's selections via the user account on the device startup condition list and the device to-be-executed task list is received.

In step 404, a scenario mode bound to the user account is established according to the user's selections on the device startup condition list and the device to-be-executed task list.

This embodiment provides a method for a user to predefine by himself or herself a scenario mode. In the method, a server acquires device information of at least one smart device bound to a user account. The device information includes device ID information and device type information; different types of smart devices may provide different state parameter information as the startup conditions, and respond to different control instructions. The server may acquire, according to the acquired device information, the startup condition options which are supported by the smart device bound to the user account as the startup conditions and the to-be-executed task options which are supported by the smart device bound to the user account as the to-be-executed tasks. The startup condition options and the to-be-executed task options that are supported by various smart devices bound to the user account are gathered to obtain a device startup condition list and a device to-be-executed task list. By merely making selection on the device startup condition list and the device to-be-executed task list, the user may establish a linkage relation between a selected startup condition option and a selected to-be-executed task option, and further establish a related scenario mode.

Further, in the scenario mode predefining method:
the step of acquiring device information of at least one smart device bound to a user account includes: acquiring user account information of the user account and the device information of the at least one smart device bound to the user account, the device information at least including device ID information and device type information;
the step of sending, according to the device information of the at least one smart device, a device startup condition list and a device to-be-executed task list matched with the device information of the at least one smart device to the user account respectively includes:
   generating a device startup condition list matched with the at least one smart device according to device type information of the at least one smart device, the device startup condition list comprising a set of startup condition options which are supported by the at least one smart device as the startup conditions;
   generating a device to-be-executed task list matched with the at least one smart device according to device type information of the at least one smart device, the device to-be-executed task list comprising a set of to-be-executed task options which are supported by the at least one smart device as the to-be-executed tasks;
   sending the generated device startup condition list and device to-be-executed task list to the user account respectively; and
   the establishing a scenario mode bound to the user account according to the user's selections on the device startup condition list and the device to-be-executed task list includes:
      establishing a scenario mode by setting a selected startup condition option as the startup condition of the scenario mode, and by setting a selected to-be-executed task option as the to-be-executed task of the scenario mode; wherein user account information of the scenario mode is the acquired user account information; and device information of a bound smart device of the scenario mode sets device information of a smart device corresponding to the selected startup condition option as the device information of the first smart device, and sets device information of a smart device corresponding to the selected to-be-executed task option as the device information of the second smart device.

In this embodiment, the device information bound to the user account acquired by the server includes device type information. A database including startup condition options which are supported by various smart devices as startup conditions and to-be-executed task options which are supported by various smart devices as to-be-executed tasks is preestablished in the server. According to the device type information of the smart device bound to the user account acquired by the server, startup condition options and to-be-executed task options corresponding to the various smart device are searched in the database, and a device startup condition list and a device to-be-executed task list are generated for the user account. In addition, the scenario mode is correspondingly established according to the selection information of the device startup condition list and the device to-be-executed task list.

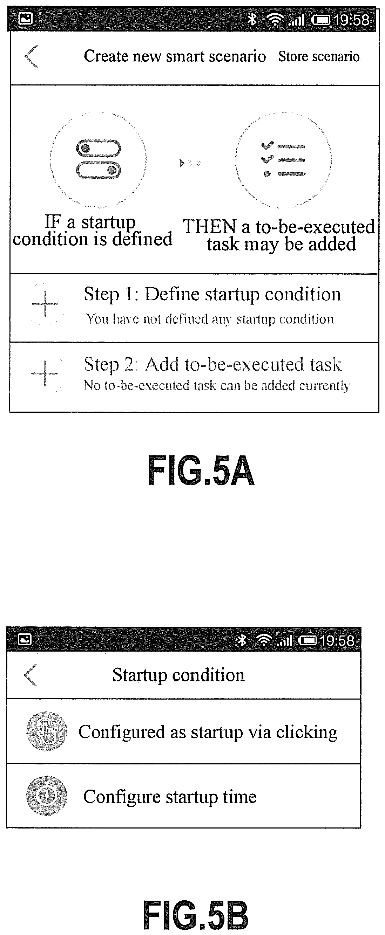

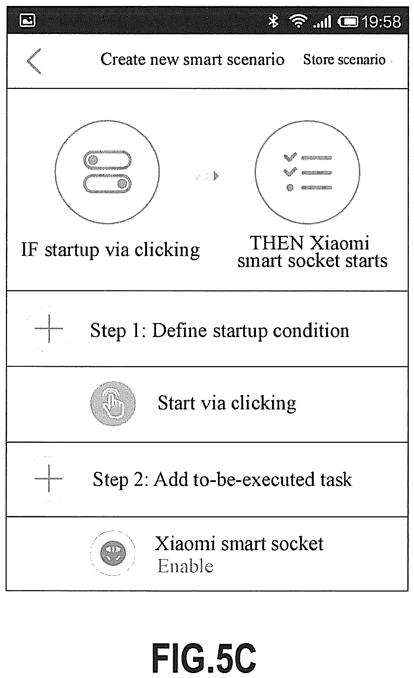

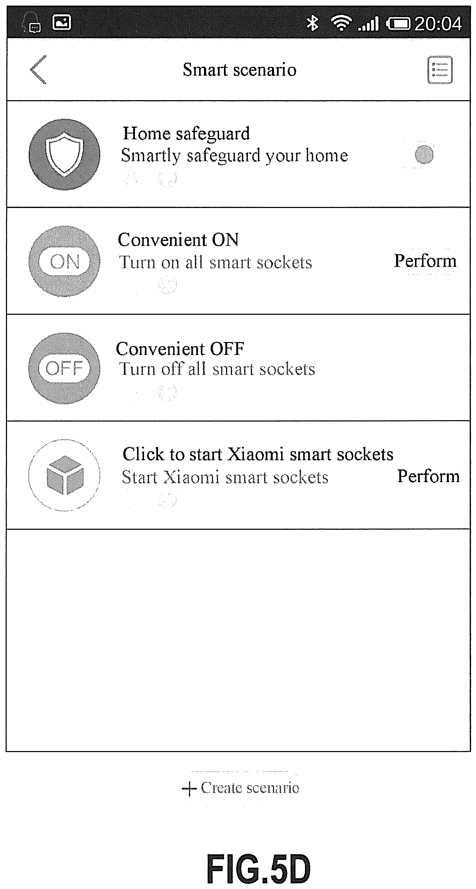

FIGS. 5A, 5B, 5C, and 5D are schematic diagrams respectively illustrating an interface of a user-defined scenario mode according to an exemplary embodiment of the invention. As illustrated in FIGS. 5A, 5B, 5C, and 5D, this embodiment gives an example of defining a scenario mode by a user himself or herself. As illustrated in FIG. 5A, this embodiment provides an interface of a terminal for the user to create a startup condition and a to-be-executed task for a scenario mode. The user may acquire a device startup condition list and a device to-be-executed task list by clicking on the interface. These two lists are both generated based on the smart device bound to a user account. As illustrated in FIG. 5B, the device startup condition list of the user includes two startup condition options "Configured to startup via clicking" and "Configure startup time". As illustrated in FIG. 5C, in the lists, the user selects "Configured to startup via clicking" as the startup condition of the scenario mode, and selects "Xiaomi smart socket-enable" as the to-be-executed task of the scenario mode. As illustrated in FIG. 5D, when the user confirms and saves the configurations, the scenario mode is successfully established. The scenario mode is based on using a mobile phone and a Xiaomi smart socket that are bound to a user account as the first smart device and a second smart device respectively, wherein the startup condition is startup via clicking and the to-be-executed task is enabling the Xiaomi smart socket. By defining the scenario mode, a linkage control relation may be established between the mobile phone and the Xiaomi smart socket bound to the user.

In this embodiment, the smart device control method based on a predefined scenario mode includes:
acquiring trigger information of the predefined scenario mode;
wherein the trigger information of the scenario mode is generated by determination of the at least one first smart device bound to the user account according to the collected state parameter information;
   or
the trigger information of the scenario mode is generated by determination of a router connected to the at least one first smart device over a network according to the state parameter information collected by the at least one first smart device; and
sending a corresponding control instruction to at least one second smart device bound to the user account in the scenario mode according to the trigger information of the scenario mode, to control the second smart device to perform a corresponding operation.

In this embodiment, triggering and determination of the scenario mode are not performed in the server, but are performed in the first smart device or a router connected to the first smart device via a network. Upon acquiring a determination result, the first smart device or the router connected to the first smart device via a network generates trigger information of the scenario mode and sends the trigger information to a server side, and directly triggers the scenario mode to send a corresponding control instruction to at least one second smart device bound to the user account in the scenario mode.

Apparatus embodiments of the invention are described hereinafter, wherein the apparatuses may be used to perform the method embodiments. Details that are not disclosed in the apparatus embodiments of the invention, reference may be made to the method embodiments of the invention.

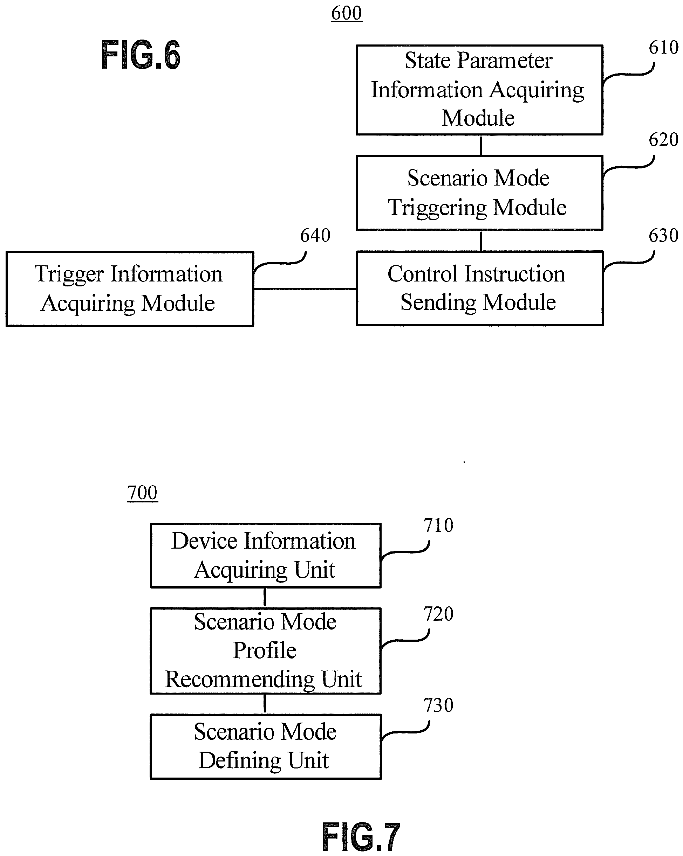

FIG. 6 is a schematic diagram illustrating a smart device control apparatus based on a predefined scenario mode according to an exemplary embodiment of the invention. The smart device control apparatus may be implemented via software, hardware or a combination of software and hardware as all or a part of an electronic device. The smart device control apparatus 600 based on a predefined scenario mode may include: a state parameter information acquiring module 610, a scenario mode triggering module 620, and a control instruction sending module 630.

The state parameter information acquiring module 610 is configured to acquire state parameter information collected by at least one first smart device bound to a user account.

The scenario mode triggering module 620 is configured to determine, according to the state parameter information, whether to trigger a predefined scenario mode, the scenario mode being configured to record an association relation information for triggering operation control on at least one second smart device according to the state parameter information collected by the at least one first smart device.

The control instruction sending module 630 is configured to: if it is determined to trigger the scenario mode, send a corresponding control instruction to at least one second smart device bound to the user account according to the scenario mode, to control the second smart device to perform a corresponding operation.

Optionally, a scenario mode at least records the following information: user account information, device information of a bound smart device, a startup condition, and a to-be-executed task, wherein
the device information of a bound smart device includes device information of at least one first smart device and at least one second smart device that are bound to the user account;
the startup condition is state parameter information collected by the at least one first smart device, the startup condition being a condition predefined for triggering a scenario mode; and
the to-be-executed task is a predefined control instruction corresponding to a scenario mode and to be sent to the at least one second smart device when the scenario mode is triggered.

Optionally, the scenario mode further includes: a startup condition logical relation; wherein
the startup condition logical relation is configured to indicate a logical relation among the state parameter information collected by the at least one first smart device, the startup condition logical relation being a condition for triggering the scenario mode; and
the scenario mode triggering module 620 includes a logical relation determining unit; wherein
the logical relation determining unit is configured to determine, according to the state parameter information, whether the state parameter information collected by the at least one first smart device satisfies the startup condition logical relation, and trigger the scenario mode if the startup condition logical relation is satisfied.

Optionally, the scenario mode further includes: a condition-task correlation table; wherein
the condition-task correlation table records a correspondence relation between at least one group of startup conditions and to-be-executed tasks; and
the scenario mode triggering module 620 includes a condition-task correlation table querying unit; wherein
the condition-task correlation table querying unit is configured to determine, according to the state parameter information, whether the state parameter information collected by the at least one first smart device matches with at least one startup condition in the condition-task correlation table, and at least one trigger to-be-executed task corresponding to the at least one startup condition according to the condition-task relation correlation table if at least one startup condition in the condition-task correlation table is satisfied.

Optionally, in the control apparatus 600:
the state parameter information acquiring module 610 is further configured to acquire user account information of the user account and device information of the at least one first smart device;
the scenario mode triggering module 620 is further configured to search for a corresponding predefined scenario mode according to the user account information and the device information of the at least one first smart device, and determine, according to the state parameter information, whether to trigger the searched scenario mode; and
the control instruction sending module 630 is further configured to: if it is determined to trigger the scenario mode, send the corresponding control instruction to the at least one second smart device according to device information of the at least one second smart device stored in the scenario mode.

Optionally, in the control apparatus 600:
the state parameter information acquiring module 610 is further configured to acquire content information collected by the at least one first smart device; and
the control instruction sending module 630 is further configured to: if it is determined to trigger the scenario mode, send the content information collected by the at least one first smart device to the at least one second smart device bound to the user account.

In conclusion, the smart device control apparatus according to this embodiment associates different smart devices with each other by using predefined scenario modes as medium, such that the different smart devices are under automatic linkage control based on association relation information defined in the scenario modes. With the smart device control apparatus, originally individual and independent smart devices may be associated with each other, and the application scenarios of the smart devices may be extended via a combination of smart devices.

In this embodiment, the control apparatus 600 further includes: a scenario mode predefining module 700. FIG. 7 is a schematic diagram of a scenario mode predefining module according to an exemplary embodiment of the invention. The scenario mode predefining module 700 may include: a device information acquiring unit 710, a scenario mode file recommending unit 720, a scenario mode defining unit 730.

The device information acquiring unit 710 is configured to acquire device information of at least one smart device bound to a user account.

The scenario mode file recommending unit 720 is configured to send, according to the device information of the at least one smart device, at least one predefined scenario mode file matched with the device information of the at least one smart device to the user account; wherein a scenario mode file corresponds to a scenario mode.

The scenario mode defining unit 730 is configured to define a scenario mode bound to the user account according to the at least one predefined scenario mode file and the user's selection via the user account.

Optionally, in the scenario mode predefining module 700:
the device information acquiring unit 710 is further configured to acquire user account information of a user account and device information of at least one smart device bound to the user account; wherein the device information at least includes device ID information and device type information;
the scenario mode file at least includes: device type information of a bound smart device, a startup condition, and a to-be-executed task; wherein the device type information of the bound smart device includes: device type information of at least one first smart device and at least one second smart device; the startup condition is state parameter information collected by the at least one first smart device which is a condition predefined for triggering the scenario mode, and the to-be-executed task is a corresponding control instruction sent to the at least one second smart device when the scenario mode is triggered;
the scenario mode file recommending unit 720 is further configured to, according to the acquired device type information of the at least one smart device bound to the user account, obtain a scenario mode file matched with the device type information of the bound smart device, and send the selected scenario mode file to the user account; and
the scenario mode defining unit 730 is further configured to define, according to the obtained scenario mode file and the user's selection via the user account, a scenario mode corresponding to the scenario mode file to be bound to the user account; wherein the defined scenario mode is configured according to the acquired device information of the at least one smart device bound to the user account.

This embodiment provides a scenario mode predefining module 700. In the scenario mode predefining module 700, several scenario mode files are predefined on a server, wherein a scenario mode file corresponds to a scenario mode. An association relation between a first smart device and a second smart device is predefined in the scenario mode file. The scenario mode predefining module 700 determines, according to acquired device information of a smart device bound to a user account, a scenario mode file suitable for the user account, and sends the matched scenario mode file to the user account. The scenario mode is finally defined according to user's selection via the user account. With the scenario mode predefining module 700, a user may conveniently and quickly configure a scenario mode based on his or her bound smart device, rather than specifically defining an association relation, thereby reducing load of the user in defining a specific scenario mode.

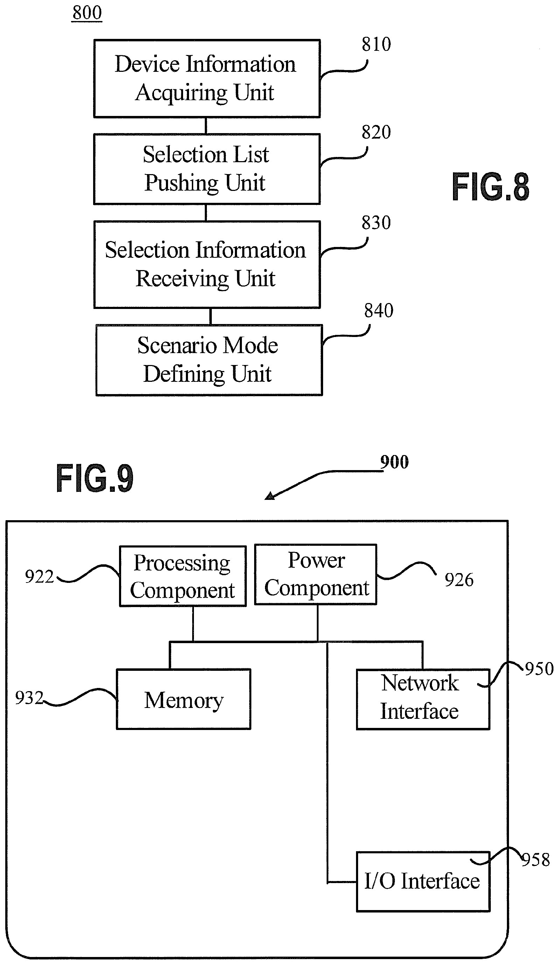

In this embodiment, the control apparatus 600 further includes: a scenario mode predefining module 800. FIG. 8 is another schematic diagram illustrating a scenario mode predefining module according to an exemplary embodiment of the invention. The scenario mode predefining module 800 may include: a device information acquiring unit 810, a selection list pushing unit 820, a selection information receiving unit 830, and a scenario mode defining unit 840.

The device information acquiring unit 810 is configured to acquire device information of at least one smart device bound to a user account.

The selection list pushing unit 820 is configured to send, according to the device information of the at least one smart device, a device startup condition list and a device to-be-executed task list matched with the device information of the at least one smart device to the user account respectively.

The selection information receiving unit 830 is configured to receive the user's selections via the user account on the device startup condition list and the device to-be-executed task list.

The scenario mode defining unit 840 is configured to establish a scenario mode bound to the user account according to the user's selections on the device startup condition list and the device to-be-executed task list.

Optionally, in the scenario mode predefining module 800:
the device information acquiring unit 810 is further configured to acquire user account information of a user account and device information of at least one smart device bound to the user account; wherein the device information at least includes device ID information and device type information;
the selection list pushing unit 820 is further configured to: generate, according to the device type information of the at least one smart device, a device startup condition list matched with the at least one smart device, the device startup condition list being a set of startup condition options which are supported by the at least one smart device as the startup conditions; generate a device to-be-executed task list matched with the at least one smart device according to device type information of the at least one smart device, the device to-be-executed task list being a set of to-be-executed task options which are supported by the at least one smart device as the to-be-executed tasks; and send the generated device startup condition list and device to-be-executed task list to the user account respectively; and
the scenario mode defining unit 840 is further configured to establish a scenario mode by setting a selected startup condition option as the startup condition of the scenario mode and by setting a selected to-be-executed task option as the to-be-executed task of the scenario mode; wherein user account information of the scenario mode is the acquired user account information; and device information of a bound smart device of the scenario mode sets device information of a smart device corresponding to the selected startup condition options as the device information of the first smart device, and sets device information of a smart device corresponding to the selected to-be-executed task options as the device information of the second smart device.

This embodiment provides a scenario mode predefining module 800 for a user to define by himself or herself a scenario mode. The scenario mode predefining module 800 acquires device information of at least one smart device bound to a user account. The device information includes device ID information and device type information. Different types of smart devices may provide different state parameter information as the startup conditions, and respond to different control instructions. Based on the acquired device information, the server may acquire the startup condition options which are supported by the smart device bound to the user account as the startup conditions and the to-be-executed task options which are supported by the smart device bound to the user account as the to-be-executed tasks. The startup condition options and the to-be-executed task options that are supported by various smart devices bound to the user account are gathered to obtain a device startup condition list and a device to-be-executed task list. By making selections on the device startup condition list and the device to-be-executed task list, the user may establish a linkage relation between a selected startup condition option and a selected to-be-executed task option, and further establish a related scenario mode.

Optionally, the control apparatus 600 further includes:
a trigger information acquiring module 640, configured to acquire trigger information of the predefined scenario mode;
wherein the trigger information of the scenario mode is generated by determination of the at least one first smart device bound to the user account according to the collected state parameter information;
   or
the trigger information of the scenario mode is generated by determination of a router connected to the at least one first smart device over a network according to the state parameter information collected by the at least one first smart device; and
the control instruction sending module 630 is configured to send a corresponding control instruction to at least one second smart device bound to the user account in the scenario mode according to the trigger information of the scenario mode, to control the second smart device to perform a corresponding operation.

In this embodiment, triggering and determination of a scenario mode are not performed in the server, but are performed in the first smart device or a router connected to the first smart device via a network. Upon acquiring a determination result, the first smart device or the router connected to the first smart device via a network generates trigger information of the scenario mode and sends the trigger information to a server side, and directly triggers the scenario mode to send a corresponding control instruction to at least one second smart device bound to the user account in the scenario mode.

FIG. 9 is a block diagram illustrating a smart device control apparatus 900 based on a predefined scenario mode according to an exemplary embodiment of the invention. For example, the apparatus 900 may be provided as a server. Referring to FIG. 9, the apparatus 900 includes a processing component 922, which further includes one or more processors, and memory resources represented by a memory 932, configured to store instructions executable by the processing component 922, for example, applications. The applications stored in the memory 932 may include one or more than one module each corresponding to a group of instructions. In addition, the processing component 922 is configured to execute the instructions, to perform the above methods.

The apparatus 900 may further include: a power component 926, configured to perform power management in the apparatus 900; a wired or wireless network interface 950, configured to connect the apparatus 900 to the network; and an input/output (I/O) interface 958. The apparatus 900 may operate an operating system stored in the memory 932, for example, Windows ServerTM, Mac OS XTM, UnixTM, LinuxTM, FreeBSDTM, or the like.

A non-transitory computer-readable storage medium is provided. When instructions stored in the storage medium are executed by a processor of the apparatus 900, the apparatus 900 is caused to perform a smart device control method as illustrated in FIG. 1, wherein the method includes:
acquiring state parameter information collected from at least one first smart device bound to a user account;
determining, according to the state parameter information, whether to trigger a predefined scenario mode, the scenario mode being configured to record an association relation information for triggering operation control on at least one second smart device according to the state parameter information collected by the at least one first smart device; and
if it is determined to trigger the scenario mode, sending a corresponding control instruction to at least one second smart device bound to the user account according to the scenario mode, to control the second smart device to perform a corresponding operation.

## Claims

1. A smart device control method based on a predefined scenario mode, the method comprising:
acquiring (102) state parameter information collected by at least one first smart device;
determining (104), according to the state parameter information, whether to trigger a predefined scenario mode, the scenario mode being configured to record an association relation information for triggering operation control on at least one second smart device according to the state parameter information collected by the at least one first smart device; and
if it is determined to trigger the scenario mode, sending (106) a corresponding control instruction to at least one second smart device bound to the user account according to the scenario mode, to control the second smart device to perform a corresponding operation;
wherein:
the at least one first smart device and the at least one second smart device are bound to the user account;
and wherein the method further comprises:
acquiring device information of the at least one first smart device and the at least one second smart device bound to the user account to acquire device type information;
the method being **characterized in that** the method further comprises:
searching a scenario mode file library according to the device type information for a scenario mode comprising the at least one first smart device and the at least one second smart device that are both bound to the user account;
sending the scenario mode to the user account; and
defining the scenario mode bound to the user account according to a user's selection to enable the scenario mode.

2. The method according to claim 1, **characterized in that** the scenario mode at least comprises: user account information, device information of a bound smart device, a startup condition, and a to-be-executed task; wherein
the device information of the bound smart device comprises device information of at least one first smart device and at least one second smart device that are bound to the user account;
the startup condition is state parameter information collected by the at least one first smart device, the startup condition being a condition predefined for triggering the scenario mode; and
the to-be-executed task is a predefined control instruction corresponding to the scenario mode and to be sent to the at least one second smart device when the scenario mode is triggered.

3. The method according to claim 2, **characterized in that** the scenario mode further comprises: a startup condition logical relation; wherein
the startup condition logical relation is configured to indicate a logical relation among the state parameter information collected by the at least one first smart device, the startup condition logical relation being a condition for triggering the scenario mode; and
the step of determining (104), according to the state parameter information, whether to trigger a predefined scenario mode comprises a step of :
determining, according to the state parameter information, whether the state parameter information collected by the at least one first smart device satisfies the startup condition logical relation, and triggering the scenario mode if the startup condition logical relation is satisfied.

4. The method according to claim 2, **characterized in that** the scenario mode further comprises: a condition-task correlation table; wherein
the condition-task correlation table records a correspondence relation between at least one group of startup conditions and to-be-executed tasks; and
the step of determining (104), according to the state parameter information, whether to trigger a predefined scenario mode comprises steps of:
determining, according to the state parameter information, whether the state parameter information collected by the at least one first smart device matches with at least one startup condition in the condition-task correlation table; and
triggering an least one to-be-executed task corresponding to the at least one startup condition according to the condition-task correlation table if at least one startup condition in the condition-task correlation table is satisfied.

5. The method according to any one of claims 1 to 4, the step of acquiring (102) comprises a step of:
acquiring user account information of the user account and device information of the at least one first smart device;
the step of determining (104) comprises steps of:
searching for at least one predefined scenario mode according to the user account information and the device information of the at least one first smart device, and determining, according to the state parameter information, whether to trigger the searched predefined scenario mode; and
the step of sending (106) comprises a step of:
if it is determined to trigger the searched scenario mode, sending the control instruction to the at least one second smart device according to device information of the at least one second smart device recorded in the searched scenario mode.

6. The method according to any one of claims 1 to 5, **characterized in that**:
the step of acquiring (102) state parameter information collected by at least one first smart device bound to a user account further comprises steps of:
acquiring content information collected by the at least one first smart device; and
if it is determined to trigger the scenario mode, the step of sending (106) a corresponding control instruction to at least one second smart device bound to the user account according to the scenario mode further comprises a step of :
sending the content information collected by the at least one first smart device to the at least one second smart device bound to the user account.

7. The method according to claim 1, **characterized in that** the method further comprises:
acquiring trigger information of the predefined scenario mode;
wherein the trigger information of the scenario mode is generated by determination of the at least one first smart device bound to the user account according to the collected state parameter information; or
the trigger information of the scenario mode is generated by determination of a router connected to the at least one first smart device over a network according to the state parameter information collected by the at least one first smart device; and
sending a corresponding control instruction to at least one second smart device bound to the user account in the scenario mode according to the trigger information of the scenario mode, to control the second smart device to perform a corresponding operation.

8. A smart device control apparatus based on a predefined scenario mode, the control apparatus comprising:
a state parameter information acquiring module (610), configured to acquire state parameter information collected by at least one first smart device;
a scenario mode triggering module (620), configured to determine, according to the state parameter information, whether to trigger a predefined scenario mode, the scenario mode being configured to record an association relation information for triggering operation control on at least one second smart device according to the state parameter information collected by the at least one first smart device; and
a control instruction sending module (630), configured to: if it is determined to trigger the scenario mode, send a corresponding control instruction to at least one second smart device bound to the user account according to the scenario mode, to control the second smart device to perform a corresponding operation;
wherein:
the at least one first smart device and the at least one second smart device are bound to the user account;
and wherein the apparatus further comprises:
a module configured to acquire device information of the at least one first smart device and the at least one second smart device bound to the user account to acquire device type information;
the apparatus being **characterized in that** the apparatus further comprises:
a module configured to search a scenario mode file library according to the device type information for a scenario mode comprising the the at least one first smart device and the at least one second smart device that are both bound to the user account;
a module configured to send the scenario mode to the user account; and
a module configured to define the scenario mode bound to the user account according to a user's selection to enable the scenario mode.

9. The control apparatus according to claim 8, **characterized in that** the scenario mode at least comprises: user account information, device information of a bound smart device, a startup condition, and a to-be-executed task; wherein
the device information of a bound smart device comprises device information of the at least one first smart device and the at least one second smart device that are bound to the user account;
the startup condition is state parameter information collected by the at least one first smart device, the startup condition being a condition predefined for triggering the scenario mode; and
the to-be-executed task is a predefined control instruction corresponding to the scenario mode and to be sent to the at least one second smart device when the scenario mode is triggered.

10. The control apparatus according to claim 9, **characterized in that** the scenario mode further comprises: a startup condition logical relation; wherein
the startup condition logical relation is configured to indicate a logical relation among the state parameter information collected by the at least one first smart device, the startup condition logical relation being a condition for triggering the scenario mode;
the scenario mode triggering module (620) comprises a logical relation determining unit; wherein
the logical relation determining unit is configured to determine, according to the state parameter information, whether the state parameter information collected by the at least one first smart device satisfies the startup condition logical relation, and trigger the scenario mode if the startup condition logical relation is satisfied.

11. The control apparatus according to claim 9, **characterized in that** the scenario mode further comprises: a condition-task correlation table; wherein
the condition-task correlation table records a correspondence relation between at least one group of startup conditions and to-be-executed tasks; and
the scenario mode triggering module (620) comprises a condition-task correlation table querying unit; wherein
the condition-task correlation table querying unit is configured to determine, according to the state parameter information, whether the state parameter information collected by the at least one first smart device matches with at least one startup condition in the condition-task correlation table, and trigger an least one to-be-executed task corresponding to the at least one startup condition according to the condition-task correlation table if at least one startup condition in the condition-task correlation table is satisfied.

12. The control apparatus according to any one of claims 8 to 11, wherein the state parameter information acquiring module (610) is further configured to acquire user account information of the user account and device information of the at least one first smart device;
the scenario mode triggering module (620) is further configured to search for at least one predefined scenario mode according to the user account information and the device information of the at least one first smart device, and determine, according to the state parameter information, whether to trigger the searched predefined scenario mode; and
the control instruction sending module (630) is further configured to: if it is determined to trigger the searched scenario mode, send the control instruction to the at least one second smart device according to device information of the at least one second smart device recorded in the searched scenario mode.

13. The control apparatus according to any one of claims 8 to 12, **characterized in that**:
the state parameter information acquiring module (610) is further configured to acquire content information collected by the at least one first smart device; and
the control instruction sending module (630) is further configured to: if it is determined to trigger the scenario mode, send the content information collected by the at least one first smart device to the at least one second smart device bound to the user account.

14. The control apparatus according to claim 8, **characterized in that** the control apparatus further comprises:
a trigger information acquiring module (640), configured to acquire trigger information of the predefined scenario mode;
wherein the trigger information of the scenario mode is generated by determination of the at least one first smart device bound to the user account according to the collected state parameter information; or
the trigger information of the scenario mode is generated by determination of a router connected to the at least one first smart device over a network according to the state parameter information collected by the at least one first smart device; and
the control instruction sending module (630) is configured to send a corresponding control instruction to at least one second smart device bound to the user account in the scenario mode according to the trigger information of the scenario mode, to control the second smart device to perform a corresponding operation.

15. A computer program including instructions for executing the steps of a smart device control method based on a predefined scenario mode according to any one of claims 1 to 7 when said program is executed by a computer.

16. A recording medium readable by a computer and having recorded thereon a computer program including instructions for executing the steps of a smart device control method based on a predefined scenario mode according to any one of claims 1 to 7.

## Patentansprüche

1. Steuerverfahren für eine intelligente Vorrichtung auf der Grundlage eines vordefinierten Szenario-Modus, wobei das Verfahren umfasst:
Erlangen (102) von Statusparameter-Informationen, die durch mindestens eine erste intelligente Vorrichtung gesammelt werden,
Bestimmen (104), gemäß den Statusparameter-Informationen, ob ein vordefinierter Szenario-Modus ausgelöst werden soll, wobei der Szenario-Modus dazu ausgestaltet ist, Assoziationsbeziehungs-Informationen zum Auslösen einer Vorgangssteuerung auf mindestens einer zweiten intelligenten Vorrichtung gemäß den Statusparameter-Informationen, die durch die mindestens eine erste intelligente Vorrichtung gesammelt wurden, aufzuzeichnen, und
falls bestimmt wird, dass der Szenario-Modus ausgelöst werden soll, Senden (106) einer entsprechenden Steueranweisung an mindestens eine zweite intelligente Vorrichtung, die gemäß dem Szenario-Modus an das Benutzerkonto gebunden ist, um die zweite intelligente Vorrichtung so zu steuern, dass sie einen entsprechenden Vorgang durchführt,
wobei:
die mindestens eine erste intelligente Vorrichtung und die mindestens eine zweite intelligente Vorrichtung an das Benutzerkonto gebunden sind,
und wobei das Verfahren ferner umfasst:
Erlangen von Vorrichtungsinformationen der mindestens einen ersten intelligenten Vorrichtung und der mindestens einen zweiten intelligenten Vorrichtung, die an das Benutzerkonto gebunden sind, um Vorrichtungstyp-Informationen zu erlangen,
wobei das Verfahren **dadurch gekennzeichnet ist, dass** das Verfahren ferner umfasst:
Durchsuchen einer Szenario-Modus-Dateibibliothek gemäß den Vorrichtungstyp-Informationen nach einem Szenario-Modus, der die mindestens eine erste intelligente Vorrichtung und die mindestens eine zweite intelligente Vorrichtung umfasst, die beide an das Benutzerkonto gebunden sind,
Senden des Szenario-Modus an das Benutzerkonto und
Definieren des Szenario-Modus, der an das Benutzerkonto gebunden ist, gemäß einer Auswahl eines Benutzers, um den Szenario-Modus zu aktivieren.

2. Verfahren nach Anspruch 1, **dadurch gekennzeichnet, dass** der Szenario 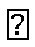 Modus mindestens umfasst: Benutzerkonto-Informationen, Vorrichtungsinformationen einer gebundenen intelligenten Vorrichtung, eine Startbedingung und eine auszuführende Aufgabe, wobei
die Vorrichtungsinformationen der gebundenen intelligenten Vorrichtung Vorrichtungsinformationen von mindestens einer ersten intelligenten Vorrichtung und mindestens einer zweiten intelligenten Vorrichtung umfassen, die an das Benutzerkonto gebunden sind,
die Startbedingung Statusparameter-Informationen sind, die durch die mindestens eine erste intelligente Vorrichtung gesammelt werden, wobei die Startbedingung eine Bedingung ist, die zum Auslösen des Szenario-Modus vordefiniert ist, und
die auszuführende Aufgabe eine vordefinierte Steueranweisung ist, die dem Szenario-Modus entspricht und an die mindestens eine zweite intelligente Vorrichtung gesendet werden soll, wenn der Szenario-Modus ausgelöst wird.

3. Verfahren nach Anspruch 2, **dadurch gekennzeichnet, dass** der Szenario-Modus ferner umfasst: eine Startbedingungs-Logikbeziehung, wobei
die Startbedingungs-Logikbeziehung dazu ausgestaltet ist, eine Logikbeziehung unter den Statusparameter-Informationen anzugeben, die durch die mindestens eine erste intelligente Vorrichtung gesammelt wurden, wobei die Startbedingungs-Logikbeziehung eine Bedingung zum Auslösen des Szenario-Modus ist, und
der Schritt des Bestimmens (104), gemäß den Statusparameter-Informationen, ob ein vordefinierter Szenario-Modus ausgelöst werden soll, einen Schritt umfasst des:
Bestimmens, gemäß den Statusparameter-Informationen, ob die Statusparameter-Informationen, die durch die mindestens eine erste intelligente Vorrichtung gesammelt wurden, die Startbedingungs-Logikbeziehung erfüllen, und Auslösens des Szenario-Modus, falls die Startbedingungs-Logikbeziehung erfüllt ist.

4. Verfahren nach Anspruch 2, **dadurch gekennzeichnet, dass** der Szenario-Modus ferner umfasst: eine Bedingung-Aufgabe-Korrelationstabelle, wobei
die Bedingung-Aufgabe-Korrelationstabelle eine Entsprechungsbeziehung zwischen mindestens einer Gruppe von Startbedingungen und auszuführenden Aufgaben aufzeichnet, und
der Schritt des Bestimmens (104), gemäß den Statusparameter-Informationen, ob ein vordefinierter Szenario-Modus ausgelöst werden soll, Schritte umfasst des:
Bestimmens, gemäß den Statusparameter-Informationen, ob die Statusparameter-Informationen, die durch die mindestens eine erste intelligente Vorrichtung gesammelt wurden, mit mindestens einer Startbedingung in der Bedingung-Aufgabe-Korrelationstabelle übereinstimmen, und
Auslösens mindestens einer auszuführenden Aufgabe, die der mindestens einen Startbedingung gemäß der Bedingung-Aufgabe-Korrelationstabelle entspricht, falls mindestens eine Startbedingung in der Bedingung-Aufgabe-Korrelationstabelle erfüllt ist.

5. Verfahren nach einem der Ansprüche 1 bis 4, wobei der Schritt des Erlangens (102) einen Schritt umfasst des:
Erlangens von Benutzerkonto-Informationen des Benutzerkontos und Vorrichtungsinformationen der mindestens einen ersten intelligenten Vorrichtung,
wobei der Schritt des Bestimmens (104) Schritte umfasst des:
Suchens nach mindestens einem vordefinierten Szenario-Modus gemäß den Benutzerkonto-Informationen und den Vorrichtungsinformationen der mindestens einen ersten intelligenten Vorrichtung und Bestimmens, gemäß den Statusparameter-Informationen, ob der gesuchte vordefinierte Szenario-Modus ausgelöst werden soll, und
wobei der Schritt des Sendens (106) einen Schritt umfasst des:
falls bestimmt wird, dass der gesuchte Szenario-Modus ausgelöst werden soll, Sendens der Steueranweisung an die mindestens eine zweite intelligente Vorrichtung gemäß Vorrichtungsinformationen der mindestens einen zweiten intelligenten Vorrichtung, die in dem gesuchten Szenario-Modus aufgezeichnet sind.

6. Verfahren nach einem der Ansprüche 1 bis 5, **dadurch gekennzeichnet, dass**:
der Schritt des Erlangens (102) von Statusparameter-Informationen, die durch mindestens eine erste intelligente Vorrichtung gesammelt werden, die an ein Benutzerkonto gebunden ist, ferner Schritte umfasst des:
Erlangens von Inhaltsinformationen, die durch die mindestens eine erste intelligente Vorrichtung gesammelt werden, und
falls bestimmt wird, dass der Szenario-Modus ausgelöst werden soll, der Schritt des Sendens (106) einer entsprechenden Steueranweisung an mindestens eine zweite intelligente Vorrichtung, die gemäß dem Szenario-Modus an das Benutzerkonto gebunden ist, ferner einen Schritt umfasst des:
Sendens der Inhaltsinformationen, die durch die mindestens eine erste intelligente Vorrichtung gesammelt wurden, an die mindestens eine zweite intelligente Vorrichtung, die an das Benutzerkonto gebunden ist.

7. Verfahren nach Anspruch 1, **dadurch gekennzeichnet, dass** das Verfahren ferner umfasst:
Erlangen von Auslöseinformationen des vordefinierten Szenario-Modus,
wobei die Auslöseinformationen des Szenario-Modus durch eine Bestimmung der mindestens einen ersten intelligenten Vorrichtung, die an das Benutzerkonto gebunden ist, gemäß den gesammelten Statusparameter-Informationen generiert werden, oder
die Auslöseinformationen des Szenario-Modus durch eine Bestimmung eines Routers, der mit der mindestens einen ersten intelligenten Vorrichtung über ein Netzwerk verbunden ist, gemäß den Statusparameter-Informationen generiert werden, die durch die mindestens eine erste intelligente Vorrichtung gesammelt wurden, und
Senden einer entsprechenden Steueranweisung an mindestens eine zweite intelligente Vorrichtung, die in dem Szenario-Modus an das Benutzerkonto gebunden ist, gemäß den Auslöseinformationen des Szenario-Modus, um die zweite intelligente Vorrichtung so zu steuern, dass sie einen entsprechenden Vorgang durchführt.

8. Steuereinrichtung für eine intelligente Vorrichtung auf der Grundlage eines vordefinierten Szenario-Modus, wobei die Steuereinrichtung umfasst:
ein Erlangungsmodul (610) für Statusparameter-Informationen, das dazu ausgestaltet ist, Statusparameter-Informationen zu erlangen, die durch mindestens eine erste intelligente Vorrichtung gesammelt werden,
ein Szenario-Modus-Auslösemodul (620), das dazu ausgestaltet ist, gemäß den Statusparameter-Informationen zu bestimmen, ob ein vordefinierter Szenario-Modus ausgelöst werden soll, wobei der Szenario-Modus dazu ausgestaltet ist, Assoziationsbeziehungs-Informationen zum Auslösen einer Vorgangssteuerung auf mindestens einer zweiten intelligenten Vorrichtung gemäß den Statusparameter-Informationen, die durch die mindestens eine erste intelligente Vorrichtung gesammelt wurden, aufzuzeichnen, und
ein Steueranweisungs-Sendemodul (630), das dazu ausgestaltet ist: falls bestimmt wird, dass der Szenario-Modus ausgelöst werden soll, eine entsprechende Steueranweisung an mindestens eine zweite intelligente Vorrichtung, die gemäß dem Szenario-Modus an das Benutzerkonto gebunden ist, zu senden, um die zweite intelligente Vorrichtung so zu steuern, dass sie einen entsprechenden Vorgang durchführt,
wobei:
die mindestens eine erste intelligente Vorrichtung und die mindestens eine zweite intelligente Vorrichtung an das Benutzerkonto gebunden sind,
und wobei die Einrichtung ferner umfasst:
ein Modul, das dazu ausgestaltet ist, Vorrichtungsinformationen der mindestens einen ersten intelligenten Vorrichtung und der mindestens einen zweiten intelligenten Vorrichtung, die an das Benutzerkonto gebunden sind, zu erlangen, um Vorrichtungstyp-Informationen zu erlangen,
wobei die Einrichtung **dadurch gekennzeichnet ist, dass** die Einrichtung ferner umfasst:
ein Modul, das dazu ausgestaltet ist, eine Szenario-Modus-Dateibibliothek gemäß den Vorrichtungstyp-Informationen nach einem Szenario-Modus, der die mindestens eine erste intelligente Vorrichtung und die mindestens eine zweite intelligente Vorrichtung umfasst, die beide an das Benutzerkonto gebunden sind, zu durchsuchen,
ein Modul, das dazu ausgestaltet ist, den Szenario-Modus an das Benutzerkonto zu senden, und
ein Modul, das dazu ausgestaltet ist, den Szenario-Modus, der an das Benutzerkonto gebunden ist, gemäß einer Auswahl eines Benutzers zu definieren, um den Szenario-Modus zu aktivieren.

9. Steuereinrichtung nach Anspruch 8, **dadurch gekennzeichnet, dass** der Szenario-Modus mindestens umfasst: Benutzerkonto-Informationen, Vorrichtungsinformationen einer gebundenen intelligenten Vorrichtung, eine Startbedingung und eine auszuführende Aufgabe, wobei
die Vorrichtungsinformationen einer gebundenen intelligenten Vorrichtung Vorrichtungsinformationen von der mindestens einen ersten intelligenten Vorrichtung und der mindestens einen zweiten intelligenten Vorrichtung umfassen, die an das Benutzerkonto gebunden sind,
die Startbedingung Statusparameter-Informationen sind, die durch die mindestens eine erste intelligente Vorrichtung gesammelt werden, wobei die Startbedingung eine Bedingung ist, die zum Auslösen des Szenario-Modus vordefiniert ist, und
die auszuführende Aufgabe eine vordefinierte Steueranweisung ist, die dem Szenario-Modus entspricht und an die mindestens eine zweite intelligente Vorrichtung gesendet werden soll, wenn der Szenario-Modus ausgelöst wird.

10. Steuereinrichtung nach Anspruch 9, **dadurch gekennzeichnet, dass** der Szenario-Modus ferner umfasst: eine Startbedingungs-Logikbeziehung, wobei
die Startbedingungs-Logikbeziehung dazu ausgestaltet ist, eine Logikbeziehung unter den Statusparameter-Informationen anzugeben, die durch die mindestens eine erste intelligente Vorrichtung gesammelt wurden, wobei die Startbedingungs-Logikbeziehung eine Bedingung zum Auslösen des Szenario-Modus ist, und
das Szenario-Modus-Auslösemodul (620) eine Logikbeziehungs-Bestimmungseinheit umfasst, wobei
die Logikbeziehungs-Bestimmungseinheit dazu ausgestaltet ist, gemäß den Statusparameter-Informationen zu bestimmen, ob die Statusparameter-Informationen, die durch die mindestens eine erste intelligente Vorrichtung gesammelt wurden, die Startbedingungs-Logikbeziehung erfüllen, und den Szenario-Modus auszulösen, falls die Startbedingungs-Logikbeziehung erfüllt ist.

11. Steuereinrichtung nach Anspruch 9, **dadurch gekennzeichnet, dass** der Szenario-Modus ferner umfasst: eine Bedingung-Aufgabe-Korrelationstabelle, wobei
die Bedingung-Aufgabe-Korrelationstabelle eine Entsprechungsbeziehung zwischen mindestens einer Gruppe von Startbedingungen und auszuführenden Aufgaben aufzeichnet, und
das Szenario-Modus-Auslösemodul (620) eine Einheit zum Abfragen der Bedingung-Aufgabe-Korrelationstabelle umfasst, wobei
die Einheit zum Abfragen der Bedingung-Aufgabe-Korrelationstabelle dazu ausgestaltet ist, gemäß den Statusparameter-Informationen zu bestimmen, ob die Statusparameter-Informationen, die durch die mindestens eine erste intelligente Vorrichtung gesammelt wurden, mit mindestens einer Startbedingung in der Bedingung-Aufgabe-Korrelationstabelle übereinstimmen, und mindestens eine auszuführende Aufgabe auszulösen, die der mindestens einen Startbedingung gemäß der Bedingung-Aufgabe-Korrelationstabelle entspricht, falls mindestens eine Startbedingung in der Bedingung-Aufgabe-Korrelationstabelle erfüllt ist.

12. Steuereinrichtung nach einem der Ansprüche 8 bis 11, wobei das Erlangungsmodul (610) für Statusparameter-Informationen ferner dazu ausgestaltet ist, Benutzerkonto-Informationen des Benutzerkontos und Vorrichtungsinformationen der mindestens einen ersten intelligenten Vorrichtung zu erlangen,
das Szenario-Modus-Auslösemodul (620) ferner dazu ausgestaltet ist, nach mindestens einem vordefinierten Szenario-Modus gemäß den Benutzerkonto-Informationen und den Vorrichtungsinformationen der mindestens einen ersten intelligenten Vorrichtung zu suchen und gemäß den Statusparameter-Informationen zu bestimmen, ob der gesuchte vordefinierte Szenario-Modus ausgelöst werden soll, und
das Steueranweisungs-Sendemodul (630) ferner dazu ausgestaltet ist:
falls bestimmt wird, dass der gesuchte Szenario-Modus ausgelöst werden soll, die Steueranweisung an die mindestens eine zweite intelligente Vorrichtung gemäß Vorrichtungsinformationen der mindestens einen zweiten intelligenten Vorrichtung zu senden, die in dem gesuchten Szenario-Modus aufgezeichnet sind.

13. Steuereinrichtung nach einem der Ansprüche 8 bis 12, **dadurch gekennzeichnet, dass**:
das Erlangungsmodul (610) für Statusparameter-Informationen ferner dazu ausgestaltet ist, Inhaltsinformationen zu erlangen, die durch die mindestens eine erste intelligente Vorrichtung gesammelt werden, und
das Steueranweisungs-Sendemodul (630) ferner dazu ausgestaltet ist: falls bestimmt wird, dass der Szenario-Modus ausgelöst werden soll, die Inhaltsinformationen, die durch die mindestens eine erste intelligente Vorrichtung gesammelt wurden, an die mindestens eine zweite intelligente Vorrichtung, die an das Benutzerkonto gebunden ist, zu senden.

14. Steuereinrichtung nach Anspruch 8, **dadurch gekennzeichnet, dass** die Steuereinrichtung ferner umfasst:
ein Erlangungsmodul (640) für Auslöseinformationen, das dazu ausgestaltet ist, Auslöseinformationen des vordefinierten Szenario-Modus zu erlangen,
wobei die Auslöseinformationen des Szenario-Modus durch eine Bestimmung der mindestens einen ersten intelligenten Vorrichtung, die an das Benutzerkonto gebunden ist, gemäß den gesammelten Statusparameter-Informationen generiert werden, oder
die Auslöseinformationen des Szenario-Modus durch eine Bestimmung eines Routers, der mit der mindestens einen ersten intelligenten Vorrichtung über ein Netzwerk verbunden ist, gemäß den Statusparameter-Informationen generiert werden, die durch die mindestens eine erste intelligente Vorrichtung gesammelt wurden, und
das Steueranweisungs-Sendemodul (630) dazu ausgestaltet ist, eine entsprechende Steueranweisung an mindestens eine zweite intelligente Vorrichtung, die in dem Szenario-Modus an das Benutzerkonto gebunden ist, gemäß den Auslöseinformationen des Szenario-Modus zu senden, um die zweite intelligente Vorrichtung so zu steuern, dass sie einen entsprechenden Vorgang durchführt.

15. Computerprogramm, das Anweisungen zum Ausführen der Schritte eines Steuerverfahrens für eine intelligente Vorrichtung auf der Grundlage eines vordefinierten Szenario-Modus nach einem der Ansprüche 1 bis 7 beinhaltet, wenn das Programm von einem Computer ausgeführt wird.

16. Aufzeichnungsmedium, das durch einen Computer ausgelesen werden kann und auf dem ein Computerprogramm aufgezeichnet ist, das Anweisungen zum Ausführen der Schritte eines Steuerverfahrens für eine intelligente Vorrichtung auf der Grundlage eines vordefinierten Szenario-Modus nach einem der Ansprüche 1 bis 7 beinhaltet.

## Revendications

1. Procédé de commande de dispositif intelligent basé sur un mode scénario prédéfini, le procédé comprenant les étapes suivantes :
acquérir (102) des informations de paramètres d'état collectées par au moins un premier dispositif intelligent ;
déterminer (104), selon les informations de paramètres d'état, s'il faut déclencher un mode scénario prédéfini, le mode scénario étant configuré pour enregistrer des informations de relation d'association pour déclencher une commande d'opération sur au moins un deuxième dispositif intelligent selon les informations de paramètres d'état collectées par l'au moins un premier dispositif intelligent ; et
s'il est déterminé de déclencher le mode scénario, envoyer (106) une instruction de commande correspondante à au moins un deuxième dispositif intelligent lié au compte utilisateur selon le mode scénario, pour commander le deuxième dispositif intelligent afin qu'il réalise une opération correspondante ;
dans lequel :
l'au moins un premier dispositif intelligent et l'au moins un deuxième dispositif intelligent sont liés au compte utilisateur ;
et dans lequel le procédé comprend en outre l'étape suivante :
acquérir des informations de dispositif de l'au moins un premier dispositif intelligent et de l'au moins un deuxième dispositif intelligent liés au compte utilisateur pour acquérir des informations de type de dispositif ;
le procédé étant **caractérisé en ce qu'**il comprend en outre les étapes suivantes :
rechercher, dans une bibliothèque de fichiers de modes scénarios selon les informations de type de dispositif, un mode scénario comprenant l'au moins un premier dispositif intelligent et l'au moins un deuxième dispositif intelligent qui sont tous deux liés au compte utilisateur ;
envoyer le mode scénario au compte utilisateur ; et
définir le mode scénario lié au compte utilisateur selon une sélection de l'utilisateur pour activer le mode scénario.

2. Procédé selon la revendication 1, **caractérisé en ce que** le mode scénario comprend au moins : des informations de compte utilisateur, des informations de dispositif d'un dispositif intelligent lié, une condition de démarrage, et une tâche à exécuter ; dans lequel
les informations de dispositif du dispositif intelligent lié comprennent des informations de dispositif d'au moins un premier dispositif intelligent et d'au moins un deuxième dispositif intelligent qui sont liés au compte utilisateur ;
la condition de démarrage comprend des informations de paramètres d'état collectées par l'au moins un premier dispositif intelligent, la condition de démarrage étant une condition prédéfinie pour déclencher le mode scénario ; et
la tâche à exécuter est une instruction de commande prédéfinie correspondant au mode scénario et devant être envoyée à l'au moins un deuxième dispositif intelligent lorsque le mode scénario est déclenché.

3. Procédé selon la revendication 2, **caractérisé en ce que** le mode scénario comprend en outre : une relation logique de condition de démarrage ; dans lequel
la relation logique de condition de démarrage est configurée pour indiquer une relation logique parmi les informations de paramètres d'état collectées par l'au moins un premier dispositif intelligent, la relation logique de condition de démarrage étant une condition pour déclencher le mode scénario ; et
l'étape pour déterminer (104), selon les informations de paramètres d'état, s'il faut déclencher un mode scénario prédéfini comprend une étape pour :
déterminer, selon les informations de paramètres d'état, si les informations de paramètres d'état collectées par l'au moins un premier dispositif intelligent satisfont la relation logique de condition de démarrage, et déclencher le mode scénario si la relation logique de condition de démarrage est satisfaite.

4. Procédé selon la revendication 2, **caractérisé en ce que** le mode scénario comprend en outre : une table de corrélation conditions-tâches ; dans lequel
la table de corrélation conditions-tâches enregistre une relation de correspondance entre au moins un groupe de conditions de démarrage et de tâches à exécuter ; et
l'étape pour déterminer (104), selon les informations de paramètres d'état, s'il faut déclencher un mode scénario prédéfini comprend les étapes suivantes :
déterminer, selon les informations de paramètres d'état, si les informations de paramètres d'état collectées par l'au moins un premier dispositif intelligent concordent avec au moins une condition de démarrage dans la table de corrélation conditions-tâches ; et
déclencher au moins une tâche à exécuter correspondant à l'au moins une condition de démarrage selon la table de corrélation conditions-tâches si au moins une condition de démarrage dans la table de corrélation conditions-tâches est satisfaite.

5. Procédé selon l'une quelconque des revendications 1 à 4, dans lequel l'étape d'acquisition (102) comprend une étape pour :
acquérir des informations de compte utilisateur du compte utilisateur et des informations de dispositif de l'au moins un premier dispositif intelligent ;
l'étape de détermination (104) comprend les étapes suivantes :
rechercher au moins un mode scénario prédéfini selon les informations de compte utilisateur et les informations de dispositif de l'au moins un premier dispositif intelligent, et déterminer, selon les informations de paramètres d'état, s'il faut déclencher le mode scénario prédéfini recherché ; et
l'étape d'envoi (106) comprend une étape pour :
s'il est déterminé de déclencher le mode scénario recherché, envoyer l'instruction de commande à l'au moins un deuxième dispositif intelligent selon des informations de dispositif de l'au moins un deuxième dispositif intelligent enregistrées dans le mode scénario recherché.

6. Procédé selon l'une quelconque des revendications 1 à 5, **caractérisé en ce que** :
l'étape pour acquérir (102) des informations de paramètres d'état collectées par au moins un premier dispositif intelligent lié à un compte utilisateur comprend en outre les étapes suivantes :
acquérir des informations de contenu collectées par l'au moins un premier dispositif intelligent ; et
s'il est déterminé de déclencher le mode scénario, l'étape pour envoyer (106) une instruction de commande correspondante à au moins un deuxième dispositif intelligent lié au compte utilisateur selon le mode scénario comprend en outre une étape pour :
envoyer les informations de contenu collectées par l'au moins un premier dispositif intelligent à l'au moins un deuxième dispositif intelligent lié au compte utilisateur.

7. Procédé selon la revendication 1, **caractérisé en ce que** le procédé comprend en outre les étapes suivantes :
acquérir des informations de déclenchement du mode scénario prédéfini ;
dans lequel les informations de déclenchement du mode scénario sont générées par la détermination de l'au moins un premier dispositif intelligent lié au compte utilisateur selon les informations de paramètres d'état collectées ; ou
les informations de déclenchement du mode scénario sont générées par la détermination d'un routeur connecté à l'au moins un premier dispositif intelligent sur un réseau selon les informations de paramètres d'état collectées par l'au moins un premier dispositif intelligent ; et
envoyer une instruction de commande correspondante à au moins un deuxième dispositif intelligent lié au compte utilisateur dans le mode scénario selon les informations de déclenchement du mode scénario, pour commander le deuxième dispositif intelligent afin qu'il réalise une opération correspondante.

8. Appareil de commande de dispositif intelligent basé sur un mode scénario prédéfini, l'appareil de commande comprenant :
un module d'acquisition d'informations de paramètres d'état (610), configuré pour acquérir des informations de paramètres d'état collectées par au moins un premier dispositif intelligent ;
un module de déclenchement de mode scénario (620), configuré pour déterminer, selon les informations de paramètres d'état, s'il faut déclencher un mode scénario prédéfini, le mode scénario étant configuré pour enregistrer des informations de relation d'association pour déclencher une commande d'opération sur au moins un deuxième dispositif intelligent selon les informations de paramètres d'état collectées par l'au moins un premier dispositif intelligent ; et
un module d'envoi d'instructions de commande (630), configuré pour : s'il est déterminé de déclencher le mode scénario, envoyer une instruction de commande correspondante à au moins un deuxième dispositif intelligent lié au compte utilisateur selon le mode scénario, pour commander le deuxième dispositif intelligent afin qu'il réalise une opération correspondante ;
dans lequel :
l'au moins un premier dispositif intelligent et l'au moins un deuxième dispositif intelligent sont liés au compte utilisateur ;
et dans lequel l'appareil comprend en outre :
un module configuré pour acquérir des informations de dispositif de l'au moins un premier dispositif intelligent et de l'au moins un deuxième dispositif intelligent liés au compte utilisateur pour acquérir des informations de type de dispositif ;
l'appareil étant **caractérisé en ce que** l'appareil comprend en outre :
un module configuré pour rechercher, dans une bibliothèque de fichiers de mode scénario selon les informations de type de dispositif, un mode scénario comprenant l'au moins un premier dispositif intelligent et l'au moins un deuxième dispositif intelligent qui sont tous deux liés au compte utilisateur ;
un module configuré pour envoyer le mode scénario au compte utilisateur ; et
un module configuré pour définir le mode scénario lié au compte utilisateur selon une sélection de l'utilisateur pour activer le mode scénario.

9. Appareil de commande selon la revendication 8, **caractérisé en ce que** le mode scénario comprend au moins : des informations de compte utilisateur, des informations de dispositif d'un dispositif intelligent lié, une condition de démarrage, et une tâche à exécuter ; dans lequel
les informations de dispositif d'un dispositif intelligent lié comprennent des informations de dispositif de l'au moins un premier dispositif intelligent et de l'au moins un deuxième dispositif intelligent qui sont liés au compte utilisateur ;
la condition de démarrage comprend des informations de paramètres d'état collectées par l'au moins un premier dispositif intelligent, la condition de démarrage étant une condition prédéfinie pour déclencher le mode scénario ; et
la tâche à exécuter est une instruction de commande prédéfinie correspondant au mode scénario et devant être envoyée à l'au moins un deuxième dispositif intelligent lorsque le mode scénario est déclenché.

10. Appareil de commande selon la revendication 9, **caractérisé en ce que** le mode scénario comprend en outre : une relation logique de condition de démarrage ; dans lequel
la relation logique de condition de démarrage est configurée pour indiquer une relation logique parmi les informations de paramètres d'état collectées par l'au moins un premier dispositif intelligent, la relation logique de condition de démarrage étant une condition pour déclencher le mode scénario ;
le module de déclenchement de mode scénario (620) comprend une unité de détermination de relation logique ; dans lequel
l'unité de détermination de relation logique est configurée pour déterminer, selon les informations de paramètres d'état, si les informations de paramètres d'état collectées par l'au moins un premier dispositif intelligent satisfont la relation logique de condition de démarrage, et déclencher le mode scénario si la relation logique de condition de démarrage est satisfaite.

11. Appareil de commande selon la revendication 9, **caractérisé en ce que** le mode scénario comprend en outre : une table de corrélation conditions-tâches ; dans lequel
la table de corrélation conditions-tâches enregistre une relation de correspondance entre au moins un groupe de conditions de démarrage et de tâches à exécuter ; et
le module de déclenchement de mode scénario (620) comprend une unité d'interrogation de table de corrélation conditions-tâches ; dans lequel
l'unité d'interrogation de table de corrélation conditions-tâches est configurée pour déterminer, selon les informations de paramètres d'état, si les informations de paramètres d'état collectées par l'au moins un premier dispositif intelligent concordent avec au moins une condition de démarrage dans la table de corrélation conditions-tâches, et déclencher au moins une tâche à exécuter correspondant à l'au moins une condition de démarrage selon la table de corrélation conditions-tâches si au moins une condition de démarrage dans la table de corrélation conditions-tâches est satisfaite.

12. Appareil de commande selon l'une quelconque des revendications 8 à 11, dans lequel le module d'acquisition d'informations de paramètres d'état (610) est en outre configuré pour acquérir des informations de compte utilisateur du compte utilisateur et des informations de dispositif de l'au moins un premier dispositif intelligent ;
le module de déclenchement de mode scénario (620) est en outre configuré pour rechercher au moins un mode scénario prédéfini selon les informations de compte utilisateur et les informations de dispositif de l'au moins un premier dispositif intelligent, et déterminer, selon les informations de paramètres d'état, s'il faut déclencher le mode scénario prédéfini recherché ; et
le module d'envoi d'instructions de commande (630) est en outre configuré pour : s'il est déterminé de déclencher le mode scénario recherché, envoyer l'instruction de commande à l'au moins un deuxième dispositif intelligent selon des informations de dispositif de l'au moins un deuxième dispositif intelligent enregistrées dans le mode scénario recherché.

13. Appareil de commande selon l'une quelconque des revendications 8 à 12, **caractérisé en ce que** :
le module d'acquisition d'informations de paramètres d'état (610) est en outre configuré pour acquérir des informations de contenu collectées par l'au moins un premier dispositif intelligent ; et
le module d'envoi d'instructions de commande (630) est en outre configuré pour : s'il est déterminé de déclencher le mode scénario, envoyer les informations de contenu collectées par l'au moins un premier dispositif intelligent à l'au moins un deuxième dispositif intelligent lié au compte utilisateur.

14. Appareil de commande selon la revendication 8, **caractérisé en ce que** l'appareil de commande comprend en outre :
un module d'acquisition d'informations de déclenchement (640), configuré pour acquérir des informations de déclenchement du mode scénario prédéfini ;
dans lequel les informations de déclenchement du mode scénario sont générées par la détermination de l'au moins un premier dispositif intelligent lié au compte utilisateur selon les informations de paramètres d'état collectées ; ou
les informations de déclenchement du mode scénario sont générées par la détermination d'un routeur connecté à l'au moins un premier dispositif intelligent sur un réseau selon les informations de paramètres d'état collectées par l'au moins un premier dispositif intelligent ; et
le module d'envoi d'instructions de commande (630) est configuré pour envoyer une instruction de commande correspondante à au moins un deuxième dispositif intelligent lié au compte utilisateur dans le mode scénario selon les informations de déclenchement du mode scénario, pour commander le deuxième dispositif intelligent afin qu'il réalise une opération correspondante.

15. Programme d'ordinateur comportant des instructions pour exécuter les étapes d'un procédé de commande de dispositif intelligent basé sur un mode scénario prédéfini selon l'une quelconque des revendications 1 à 7 lorsque ledit programme est exécuté par un ordinateur.

16. Support d'enregistrement lisible par un ordinateur et sur lequel est enregistré un programme d'ordinateur comportant des instructions pour exécuter les étapes d'un procédé de commande de dispositif intelligent basé sur un mode scénario prédéfini selon l'une quelconque des revendications 1 à 7.
